(19) Europäisches Patentamt / European Patent Office / Office européen des brevets

(11) **EP 4 337 511 B1**

(12) **FASCICULE DE BREVET EUROPEEN**

(45) Date de publication et mention de la délivrance du brevet:
**26.03.2025 Bulletin 2025/13**

(21) Numéro de dépôt: **23730005.8**

(22) Date de dépôt: **25.05.2023**

(51) Classification Internationale des Brevets (IPC):
**B61K 9/08** *(2006.01)* **E01B 35/06** *(2006.01)*

(52) Classification Coopérative des Brevets (CPC):
**B61D 15/12; B61K 9/08; E01B 35/00;** B61L 23/047;
G01C 15/00; G01C 21/165; G01C 21/1656

(86) Numéro de dépôt international:
**PCT/EP2023/064105**

(87) Numéro de publication internationale:
**WO 2023/232645 (07.12.2023 Gazette 2023/49)**

(54) **PROCÉDÉ DE DÉTERMINATION D'AU MOINS UN PARAMÈTRE DE LA GÉOMÉTRIE D'UNE VOIE FERRÉE, ET SYSTÈME POUR LA MISE EN OEUVRE DU PROCÉDÉ**

VERFAHREN ZUR BESTIMMUNG MINDESTENS EINES GEOMETRIEPARAMETERS EINES EISENBAHNGLEISES UND SYSTEM ZUR DURCHFÜHRUNG DES VERFAHRENS

METHOD FOR DETERMINING AT LEAST ONE GEOMETRY PARAMETER OF A RAILROAD TRACK AND SYSTEM FOR IMPLEMENTING THE METHOD

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorité: **28.05.2022 FR 2205102**

(43) Date de publication de la demande:
**20.03.2024 Bulletin 2024/12**

(73) Titulaire: **Matisa Matériel Industriel S.A.**
**1023 Crissier (CH)**

(72) Inventeurs:
- **SAVOYAT, Marc-Antoine**
 **1020 Renens (CH)**
- **RICHOZ, Guillaume**
 **1623 Semsales (CH)**

(74) Mandataire: **Alatis**
 **3, rue Paul Escudier**
 **75009 Paris (FR)**

(56) Documents cités:
**EP-A1- 2 806 065**

- **JOS\'E L ESCALONA: "A methodology for the measurement of track geometry based on computer vision and inertial sensors", ARXIV.ORG, CORNELL UNIVERSITY LIBRARY, 201 OLIN LIBRARY CORNELL UNIVERSITY ITHACA, NY 14853, 9 August 2020 (2020-08-09), XP081737359**
- **MUÑOZ SERGIO ET AL: "Estimation of lateral track irregularity using a Kalman filter. Experimental validation", JOURNAL OF SOUND AND VIBRATION, ELSEVIER, AMSTERDAM , NL, vol. 504, 10 April 2021 (2021-04-10), XP086572607, ISSN: 0022-460X, [retrieved on 20210410], DOI: 10.1016/J.JSV.2021.116122**
- **CHEN QIJIN ET AL: "Railway Track Irregularity Measuring by GNSS/INS Integration", NAVIGATION: JOURNAL OF THE INSTITUTE OF NAVIGATION, INSTITUTE OF NAVIGATION, FAIRFAX, VA, US, vol. 62, no. 1, 1 March 2015 (2015-03-01), pages 83 - 93, XP056009736, ISSN: 0028-1522, DOI: 10.1002/NAVI.78**

- WESTON P F ET AL: "Monitoring lateral track irregularity from in-service railway vehicles", PROCEEDINGS OF THE INSTITUTION OF MECHANICAL ENGINEERS. PART F,JOURNAL OF RAIL AND RAPID TRANSIT, vol. 221, no. 1, 1 January 2007 (2007-01-01), GB, pages 89 - 100, XP093013018, ISSN: 0954-4097, Retrieved from the Internet <URL:http://journals.sagepub.com/doi/pdf/10.1243/0954409JRRT64> DOI: 10.1243/0954409JRRT64
- WESTEON P F ET AL: "Monitoring vertical track irregularity from in-service railway vehicles", PROCEEDINGS OF THE INSTITUTION OF MECHANICAL ENGINEERS. PART F,JOURNAL OF RAIL AND RAPID TRANSIT, vol. 221, no. 1, 1 January 2007 (2007-01-01), GB, pages 75 - 88, XP093013014, ISSN: 0954-4097, Retrieved from the Internet <URL:http://journals.sagepub.com/doi/pdf/10.1243/0954409JRRT65> DOI: 10.1243/0954409JRRT65
- BOKHMAN E D ET AL: "Optical-inertial system for railway track diagnostics", 2014 DGON INERTIAL SENSORS AND SYSTEMS (ISS), IEEE, 16 September 2014 (2014-09-16), pages 1 - 17, XP032738643, DOI: 10.1109/INERTIALSENSORS.2014.7049477

**Description**

**DOMAINE TECHNIQUE DE L'INVENTION**

L'invention se rapporte à la détermination de certains paramètres de la géométrie d'une voie ferrée, en vue notamment de son inspection ou de son contrôle, par exemple lors de sa pose, de sa surveillance, de sa maintenance ou de sa réfection.

**ETAT DE LA TECHNIQUE ANTERIEURE**

Les principaux paramètres de la géométrie d'une voie définis dans la norme EN 13848 sont :

- l'écartement : plus petite distance entre les rails jusqu'à 14mm sous le plan de roulement ;

- le nivellement longitudinal : variation des altitudes successives de la table de roulement par rapport à une altitude de référence qui est une moyenne glissante ;

- le dévers : différence d'altitude entre les tables de roulement des rails gauche et droit ;

- le dressage : variation des positions dans le plan horizontal de la position de chaque fil de rail par rapport à une position de référence qui est une moyenne glissante ;

- le gauche : variation du dévers.

Les mesures de nivellement longitudinal, de dressage et de gauche sont des mesures de variation. On parle alors de mesures relatives en oppositions au dévers et à l'écartement qui sont des mesures absolues. Suivant la norme, le nivellement longitudinal et le dressage sont étudiées dans différents domaines de longueurs d'ondes :

- D1 : 3m à 25m

- D2 : 25m à 70m

- D3 : 70m à 150m

Pour déterminer la géométrie d'une voie ferrée, il est connu de faire circuler sur la voie un véhicule instrumenté, dont le châssis de caisse ou de bogie est équipé d'une centrale inertielle délivrant des mesures gyroscopiques d'angles lacet, de tangage et de roulis et des mesures accélérométriques suivant trois axes. Le véhicule est en outre équipé de lasers de détection permettant de déterminer la position relative du châssis, donc de la centrale inertielle, par rapport aux files de rails de la voie ferrée.

Un tel dispositif à mesure inertielle sans contact est notamment mis en œuvre dans la rame de mesure à grande vitesse IRIS 320 (TGV d'Inspection Rapide des Installations de Sécurité à 320 km/h), qui permet une mesure de l'ensemble des paramètres de la géométrie voie jusqu'à une vitesse de circulation sur la voie du train de 360 km/h.

Un inconvénient de ce dispositif est qu'il impose une vitesse minimale de circulation du véhicule de mesure sur la voie. À faible vitesse en effet, les signaux accélérométriques qui, par double intégration temporelle, permettent d'accéder aux déplacements dans les trois dimensions de l'espace, sont faibles et n'exploitent pas la pleine dynamique des capteurs. Il s'en suit que les mesures accélérométriques sont potentiellement entachées d'imprécisions ou de biais systématiques, qui se trouvent amplifiés par les opérations de double intégration, au point de générer une dérive temporelle constante dans l'estimation des déplacements dans les trois dimensions. En pratique, on constate que ces dérives ne sont plus négligeable en dessous d'une certaine vitesse de circulation, qui en pratique peut être de 60 km/h, de sorte qu'il n'est pas possible d'obtenir de mesures pour des marches lentes ou avec des arrêts. Le champ d'application des véhicules de mesure équipés d'un tel système à mesure inertielle classique est donc limité. En particulier, ils ne peuvent être employés sur un chantier de réfection d'une voie ferrée, qui progresse à une vitesse de travail bien inférieure à la vitesse minimale de fonctionnement de dispositif de mesure et qui peut avoir une vitesse nulle lors d'arrêts de durée arbitrairement grande.

Dans le document José L. Escalona: "A methodology for the measurement of track geometry based on computer vision and inertial sensors", ARXIV.ORG, CORNELL UNIVERSITY LIBRARY, 201 OLIN LIBRARY CORNELL UNIVERSITY ITHACA, NY 14853, 9 août 2020, XP081737359, est décrit un procédé selon le préambule de la revendication 1.

**EXPOSE DE L'INVENTION**

L'invention vise à remédier aux inconvénients de l'état de la technique et à proposer des moyens pour déterminer, avec la précision souhaitée en pratique, la géométrie d'une voie ferrée, qui puisse être mise en œuvre à faible vitesse de circulation sur la voie incluant des arrêts arbitrairement long.

Pour ce faire est proposé, selon un premier aspect de l'invention, un procédé de détermination d'au moins un paramètre géométrique d'une voie ferrée à deux files de rails, dans lequel :

- on fait rouler sur la voie ferrée un véhicule portant une centrale inertielle, un équipement de mesure d'au moins une composante d'orientation relative d'au moins une des deux files de rails par rapport à la centrale inertielle, et un ou plusieurs odomètres,
- on détermine, en fonction au moins de signaux délivrés par la centrale inertielle, des valeurs successives d'au moins une composante d'orientation absolue de la centrale inertielle dans un référentiel géostationnaire,
- pour au moins une file de rails observée parmi les deux files de rails, et de préférence pour chacune des deux files de rails prise comme file de rails observée,

    - on détermine, en fonction au moins de signaux délivrés par le ou les odomètres, des valeurs successives d'abscisse curviligne du véhicule sur la file de rails observée,
    - on détermine, en fonction au moins de signaux délivrés par l'équipement de mesure, des valeurs successives d'au moins une composante d'orientation relative de la file de rails observée par rapport à la centrale inertielle,
    - on calcule, en fonction au moins des valeurs successives de la composante d'orientation absolue de la centrale inertielle et des valeurs successives de la composante d'orientation relative de la file de rails observée par rapport à la centrale inertielle, des valeurs successives d'au moins une composante d'orientation absolue ou de positionnement absolu de la file de rails observée,
    - on construit une fonction s → G (s) liant certaines au moins des valeurs successives d'abscisse curviligne à des valeurs concomitantes parmi les valeurs successives de la composante d'orientation absolue ou de positionnement absolu de la file de rails observée dans l'espace,
    - on applique un filtre linéaire passe-haut ou passe-bande à la fonction s → G (s), de manière à construire une fonction filtrée $s \rightarrow F\ (s)$,
    - on estime, pour une succession de valeurs courantes d'abscisse curviligne $l$ parmi les valeurs d'abscisse curviligne, une intégrale $I(l)$, sur un intervalle donné d'abscisses curvilignes borné par une valeur d'abscisse curviligne de référence $l_0$ et par la valeur courante d'abscisse curviligne $l$, de la fonction filtrée

[Math 1]

$$I(l) = \int_{s=l_o}^{s=l} F(s)ds$$

En procédant, pour chaque file de rails observée, à une unique intégration spatiale plutôt qu'une double intégration temporelle d'une fonction filtrée liant l'abscisse curviligne du véhicule sur la file de rails observée à une composante d'orientation absolue ou de positionnement absolu, on élimine tous les effets liés au temps et en particulier les effets de dérive.

En pratique, les valeurs successives d'abscisse curviligne ne sont pas nécessairement déterminées à intervalle de distance constant. Les différents signaux peuvent notamment être échantillonnés à intervalle de temps constant, de préférence de façon synchronisée de façon à obtenir une bonne concomitance entre les valeurs déterminées à partir des signaux de la central inertielle, du ou des odomètres et de l'équipement de mesure.

La centrale inertielle mise en œuvre doit être d'un niveau de précision permettant effectivement d'accéder à des composantes d'orientation absolue dans un référentiel géostationnaire, c'est-à-dire sans dérive. Il s'agit donc d'un type de centrale dont les gyroscopes sont en mesure de détecter la projection de la rotation de la terre et dont les accéléromètres sont en mesure de détecter la projection de la gravité.

En appliquant le filtre passe bande ou passe haut à la fonction d'entrée $s \rightarrow G\ (s)$ avant l'opération d'intégration, on évite les potentielles instabilités numériques qui résulteraient d'une intégration de la composante continue de la fonction d'entrée. Le filtre linéaire mis en œuvre est de préférence un filtre à réponse impulsionnelle finie d'ordre N quelconque, de préférence supérieur ou égal à 2.

De préférence, le filtre linéaire est un filtre passe-bande, de préférence dans l'une des trois bandes suivantes : 3m à 25m, 25m à 70m, 70m à 150m, ou une fonction de calcul de flèche. En pratique, on peut naturellement construire à partir de la même fonction s → G (s) plusieurs fonctions filtrées en parallèle, chacune pour une bande de longueurs d'onde ou un type de filtre.

En pratique, l'estimation de l'intégrale est obtenue par une somme discrète, de préférence, l'intégrale *I(l)* est estimée par une somme de Riemann ou par la méthode des trapèzes sur l'intervalle donné, avec un pas inférieur à 25cm, et de préférence inférieur à 1cm.

Suivant un mode de réalisation, l'opération de calcul des valeurs successives d'au moins une composante d'orientation ou de positionnement absolue de la file de rails observée consiste, à des instants successifs, en une somme algébrique d'une valeur instantanée de la composante d'orientation absolue de la centrale inertielle et d'une valeur instantanée simultanée de la composante d'orientation relative de chacune de la file de rails observée par rapport à la centrale inertielle.

Suivant un mode de réalisation, la composante d'orientation relative de la file de rails observée par rapport à la centrale inertielle est un angle d'orientation dans un plan horizontal, et la composante d'orientation absolue de la centrale inertielle est un angle de lacet, l'intégrale I(l) étant un paramètre de dressage. Si l'on note $\psi_R$ la valeur instantanée de l'angle déterminé par l'équipement de mesure dans le plan horizontal entre la direction longitudinale de la centrale inertielle et la direction de la file de rails observée, et $\psi_C$ la valeur instantanée de l'angle de lacet déterminé simultanément par la centrale inertielle, la composante d'orientation absolue $\psi_A$ de la file de rails observée peut s'exprimer comme la somme algébrique :

[Math 2]

$$\psi_A = \psi_R + \psi_C$$

Suivant un autre mode de réalisation, la composante d'orientation relative de la file de rails observée par rapport à la centrale inertielle est un angle d'orientation par rapport à un plan vertical longitudinal (V) du véhicule, et la composante d'orientation absolue de la centrale inertielle est un angle de tangage, l'intégrale I(l) étant un paramètre de nivellement longitudinal. Si l'on note $\theta_R$ la valeur instantanée de l'angle déterminé par l'équipement de mesure dans le plan vertical longitudinal entre la direction longitudinale de la centrale inertielle et la direction de la file de rails observée, et $\theta_C$ la valeur instantanée de l'angle de tangage déterminé simultanément par la centrale inertielle, la composante d'orientation absolue de la file de rails peut s'exprimer comme la somme algébrique :

[Math 3]

$$\theta_A = \theta_R + \theta_C$$

De façon préférentielle, les opérations de calcul des valeurs successives d'au moins une composante d'orientation absolue d'une file de rails observée parmi les deux files de rails, de construction de la fonction $s \rightarrow G(s)$, d'application d'un filtre linéaire, de construction de la fonction filtrée $s \rightarrow F(s)$ et d'estimation de l'intégrale *I(l)* sont effectuées en parallèle pour obtenir la coordonnée intrinsèque de dressage et la coordonnée intrinsèque de nivellement longitudinal.

Suivant un mode de réalisation, on prévoit que pour chaque file de rails observée, l'équipement de mesure délivre au moins deux signaux simultanés de mesure de distance latérale entre deux points de référence du véhicule et la file de rails observée, les deux points de référence étant à une distance (A) l'un de l'autre supérieure à 250mm, et de préférence supérieure à 500mm. Si l'on note A la distance entre les deux points de référence visant une même file de rails observée, $y_1$ et $y_2$ les distances latérales mesurées entre la file de rails observé et chaque point de référence et en supposant que lorsque $y_1 = y_2$, l'axe longitudinal de la centrale inertielle est aligné avec l'axe longitudinal de la file de rails, l'équipement de mesure permet d'accéder à la composante d'orientation relative constituée par l'angle de lacet $\psi_R$ de la centrale inertielle par rapport à la file de rails observée, par l'équation :

[Math 4]

$$\psi_R = arctan\left(\frac{y_1 - y_2}{A}\right)$$

Suivant un mode de réalisation, on prévoit que pour chaque file de rails observée, l'équipement de mesure délivre au moins deux signaux simultanés de mesure de distance verticale entre deux points de référence du véhicule et la file de rails observée, les deux points de référence étant à une distance (B) l'un de l'autre supérieure à 250mm, et de préférence supérieure à 500mm. Si l'on note B la distance entre les deux points de référence visant une même file de rails

observée, $z_1$ et $z_2$ les distances verticales mesurées entre la file de rails observée et chaque point de référence et en supposant que lorsque $z_1 = z_2$, l'axe longitudinal de la centrale inertielle est aligné avec l'axe longitudinal de la file de rails, l'équipement de mesure permet d'accéder à la composante d'orientation relative constituée par l'angle de lacet $\theta_R$ de la centrale inertielle par rapport à la file de rails observée, par l'équation :

[Math 5]

$$\theta_R = arctan\left(\frac{z_1 - z_2}{B}\right)$$

Les capteurs de l'équipement de mesure peuvent fonctionner suivant différents principes (optique, magnétique, capacitif, etc.), qui fonctionnent de manière linéaire et optimale dans une plage de fonctionnement relativement étroite. On a donc intérêt à ce que le positionnement du véhicule sur la voie ferrée, tant vertical que latéral, soit proche d'une position « idéale » d'alignement à chaque instant. À cet effet, on peut prévoir que l'on commande au moins un actionneur de correction d'inscription du véhicule sur la voie ferrée en fonction des signaux délivrés par l'équipement de mesure ou des valeurs successives de la composante d'orientation relative de la file de rails observée par rapport à la centrale inertielle pour réduire un écart entre les signaux délivrés par l'équipement de mesure et des valeurs prédéterminées, ou pour réduire un écart entre les valeurs successives de la composante d'orientation relative de la file de rails observée et une valeur prédéterminée de la composante d'orientation relative de la file de rails observée. L'opération de correction sera particulièrement utile pour un véhicule roulant sur une seule paire de roues.

Suivant un mode de réalisation, l'opération de détermination des valeurs successives d'abscisse curviligne du véhicule sur la file de rails observée est faite en fonction au moins de signaux délivrés par un odomètre associé à la file de rail observée parmi le ou les odomètres. Dans le cas où chacune des files de rails est associée à au moins un odomètre, cette opération pourra être effectuée pour chacune des files de rails.

Suivant un mode de réalisation, l'opération de détermination des valeurs successives d'abscisse curviligne du véhicule sur la file de rails observée est faite en fonction au moins de signaux délivrés par un odomètre qui n'est pas associé à la file de rail observée parmi le ou les odomètres et de signaux délivrés par l'équipement de mesure. Dans le cas où une seule des files de rails est associée à un odomètre, cette opération pourra être effectuée pour l'autre file de voie.

En pratique, les roues auxquelles sont liées le ou les odomètres, peuvent de façon transitoire perdre le contact avec la file de rails observée, auquel cas les signaux délivrés ne renseignent plus de façon fiable sur le positionnement du véhicule par rapport à la file de rails observée. Suivant un mode de réalisation, on détecte des défaillances du ou des odomètres en comparant des valeurs d'accélération longitudinale délivrées par la centrale inertielle à des valeurs accélération moyenne déterminée en fonction des signaux délivrés par le ou les odomètres et/ou en comparant des valeurs de vitesse angulaire autour d'un axe vertical délivrées par la centrale inertielle à des valeurs de vitesse angulaire déduite des signaux délivrés par le ou les odomètres. De préférence, on prévoit que lorsqu'une défaillance est détectée, on exécute une procédure de sécurité, dans laquelle on détermine les valeurs successives d'abscisse curviligne du véhicule sur chacune des deux files de rails en fonction au moins de signaux accélérométriques ou de vitesse angulaire délivrés par la centrale inertielle.

Suivant un autre aspect de l'invention, celle-ci a trait à un système pour la mise en œuvre du procédé selon le premier aspect de l'invention, ou un de ses modes de réalisation, comportant un véhicule apte à rouler sur une voie ferrée à deux files de rails parallèles, le véhicule portant une centrale inertielle à au moins trois gyromètres et trois accéléromètres, un équipement de mesure d'une orientation relative de chacune des deux files de rails par rapport à la centrale inertielle, et un ou plusieurs odomètres, caractérisé en ce que le système comporte en outre des moyens de calcul programmés pour exécuter les opérations de calcul des valeurs successives d'au moins une composante d'orientation ou de positionnement absolue d'une file de rails observée parmi les deux files de rails, de construction de la fonction $s \rightarrow G(s)$, d'application d'un filtre linéaire, de construction de la fonction filtrée $s \rightarrow F(s)$ et d'estimation de l'intégrale $I(l)$.

Suivant un mode de réalisation, l'équipement de mesure comporte, associés à chacune des deux files de rails, au moins deux capteurs de mesure de distance latérale entre deux points de référence du véhicule et la file de rails associée, les deux points de référence étant à une distance (A) l'un de l'autre supérieure à 250mm, et de préférence supérieure à 500mm. Chacun des capteurs est ici dédié à la mesure d'une distance latérale au niveau d'un des points de référence.

Suivant un mode de réalisation, l'équipement de mesure comporte, associés à chacune des deux files de rails, au moins deux capteurs de mesure de distance verticale entre deux points de référence du véhicule et la file de rails associée, les deux points de référence étant à une distance (B) l'un de l'autre supérieure à 250mm, et de préférence supérieure à 500mm. Chacun des capteurs est ici dédié à la mesure d'une distance verticale au niveau d'un des points de référence.

D'autres principes de mesure de l'orientation relative de la centrale inertielle par rapport à chacune des files de rails sont envisagés. Suivant un mode de réalisation, l'équipement de mesure comporte au moins une et de préférence au moins deux caméras de détection d'un ou plusieurs faisceaux laser linéiques projetés sur chacune des files de rails. Par exemple, chaque caméra peut capturer la position d'une ligne laser projetée sur la file de rails observée, l'équipement de mesure déterminant par triangulation la position verticale et latérale relative entre la file de rails observée et la caméra, placée dans le repère de la centrale inertielle.

Suivant un autre mode de réalisation, l'équipement de mesure comporte au moins un et de préférence au moins deux télémètres lasers scrutant les files de rails de la voie ferrée. Suivant le principe de télémétrie par laser, la distance est donnée par la mesure du délai entre l'émission d'une impulsion et la détection d'une impulsion réfléchie. Le faisceau laser projeté est orienté par un miroir tournant, ce qui permet de scruter un plan de l'espace qui peut couvrir les deux files de rails et d'en déduire par triangulation pour chaque file de rails une mesure de distance latérale et une mesure de distance verticale. Avec deux télémètres laser placés à distance l'un de l'autre dans la direction longitudinale du véhicule, on peut ainsi obtenir les huit dimensions recherchées, à savoir quatre distances latérales et quatre distances verticales.

Le cas échéant, l'équipement de mesure peut comporter en outre un capteur d'écartement de la voie ferrée, bien que cette dimension puisse être déduite par les mesures de distance latérale entre les divers points de référence et les deux files de rails. Le cas échéant, l'équipement de mesure peut comporter en outre un capteur de dévers de la voie ferrée.

Suivant un mode de réalisation, le véhicule est un chariot à deux roues, mû par une machine et relié à la machine par l'intermédiaire d'au moins trois liaisons permettant de piloter l'assiette et l'inscription du chariot en fonction des composantes d'orientation relative.

Suivant un mode de réalisation alternatif, le véhicule est un chariot à au moins quatre roues.

## BREVE DESCRIPTION DES FIGURES

D'autres caractéristiques et avantages de l'invention ressortiront à la lecture de la description qui suit, en référence aux figures annexées, qui illustrent :

- la figure 1, une vue schématique de côté d'un système de détermination de paramètres géométrique d'une voie ferrée suivant un mode de réalisation de l'invention ;

- la figure 2, une vue schématique de dessus du système de la figure 1 ;

- la figure 3, une vue schématique de capteurs de distance intégrés à un équipement de mesure du système de la figure 1 ;

- La figure 4, un schéma de visualisation d'un procédé de détermination de paramètre géométrique d'une voie ferrée selon un mode de réalisation de l'invention ;

- La figure 5, un schéma de visualisation d'une opération de filtrage du procédé de la figure 4.

Pour plus de clarté, les éléments identiques ou similaires sont repérés par des signes de référence identiques sur l'ensemble des figures.

## DESCRIPTION DÉTAILLÉE DE MODES DE REALISATION

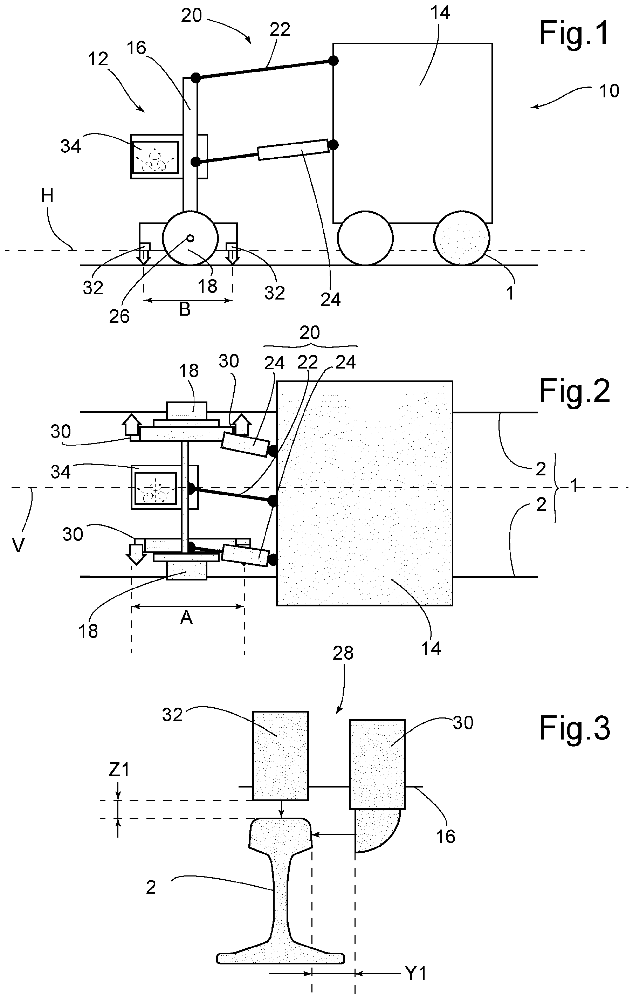

Sur les figures 1 et 2 est illustré un système 10 de détermination d'au moins un paramètre géométrique d'une voie ferrée 1 à deux files de rails 2, comportant un véhicule 12 apte à rouler sur la voie ferrée, attelé à une machine ferroviaire 14, qui peut notamment être une machine de pose, de réfection ou de renouvellement de la voie ferrée. Le véhicule 12 est ici un chariot comportant un châssis indéformable 16 reposant sur unique paire de roues 18 le cas échéant avec interposition d'une suspension primaire. Le chariot 12 est de préférence sans moyen de propulsion, et simplement tracté ou poussé par la machine ferroviaire 14 au fur et à mesure de l'avancée de cette dernière sur la voie. L'attelage 20 liant le chariot 12 à la machine ferroviaire 14 est ici constitué par une liaison à deux rotules 22 et deux vérins 24 pour permettre d'ajuster l'orientation angulaire du châssis 16 par rapport à la machine ferroviaire 14 et à la voie ferrée 1, notamment dans un plan vertical et dans un plan transversal. On notera toutefois que l'ajustement de l'orientation du châssis 16 par rapport à la voie ferrée 1 peut le cas échéant être obtenu par d'autres moyens d'ajustement, notamment en contrôlant des actionneurs disposés au niveau d'une suspension primaire entre le châssis 16 et les roues 18. On notera également que les roues 18 sont de préférence indépendantes, au sens où elles tournent indépendamment l'une de l'autre.

Le chariot 12 est instrumenté avec divers dispositifs de mesure, et notamment au moins un odomètre 26 équipant par exemple une des roues 18 du chariot 12 pour déterminer la distance parcourue sur la file de rails 2 sur laquelle roule la roue 18, ou l'abscisse curviligne du chariot 12 par rapport à cette file de rails 2. De préférence, chacune des deux roues 18 est équipée d'un odomètre 26, de façon à pouvoir déterminer directement l'abscisse curviligne du chariot 12 par rapport à chacune des deux lignes de rails 2 de la voie ferrée 1.

Le chariot 12 comporte en outre un équipement de mesure 28 destiné à déterminer l'orientation du châssis 16 par rapport à chaque file de rail 2, au moins dans un plan de référence du châssis 16, et de préférence dans au moins deux plans orthogonaux, à savoir un plan horizontal H et un plan vertical longitudinal V.

À cet effet, l'équipement de mesure comporte, associés à au moins une des deux files de rails 2, et de préférence à chacune des deux files de rails 2, au moins deux capteurs de mesure de distance latérale 30 entre deux points de référence du véhicule et la file de rails associée, les deux points de référence étant à une distance A l'un de l'autre, comme illustré sur la figure 2. Si l'on note $y_1$ et $y_2$ les distances latérales mesurées entre la file de rails 2 observée et chaque point de référence 30 et en supposant que lorsque $y_1 = y_2$, l'axe longitudinal du châssis 16 est aligné avec l'axe longitudinal de la file de rails 2, l'équipement de mesure permet d'accéder à la composante d'orientation relative constituée par l'angle de lacet $\psi_R$ du châssis par rapport à la file de rails observée dans un plan horizontal, par l'équation :

[Math 6]

$$\psi_R = arctan\left(\frac{y_1 - y_2}{A}\right)$$

La précision du résultat augmente naturellement avec la distance A, que l'on choisira de préférence supérieure à 250mm, et de préférence supérieure à 500.

De façon similaire pour l'orientation du châssis du chariot observée dans un plan vertical V, l'équipement de mesure comporte, associés à au moins une des deux files de rails 2, et de préférence à chacune des deux files de rails 2, au moins deux capteurs de mesure de distance verticale 32 entre deux points de référence du véhicule et la file de rails associée, comme illustré sur la figure 1. Si l'on note B la distance entre les deux points de référence 32 visant une même file de rails observée, que l'on choisira de préférence supérieure à 250mm, et de préférence supérieure à 500, et $z_1$ et $z_2$ les distances verticales mesurées entre la file de rails observée et chaque point de référence et en supposant que lorsque $z_1 = z_2$, l'axe longitudinal du châssis 16e est aligné avec l'axe longitudinal de la file de rails, l'équipement de mesure permet d'accéder à la composante d'orientation relative constituée par l'angle de tangage $\theta_R$ du châssis par rapport à la file de rails observée dans un plan longitudinal vertical du châssis, par l'équation :

[Math 7]

$$\theta_R = arctan\left(\frac{z_1 - z_2}{B}\right)$$

La mesure de distance à la file de rails 2 peut se faire avec des capteurs sans contact 30, 32 comme illustré sur la figure 3, notamment des capteurs de proximité, notamment des capteurs inductifs, photoélectriques, magnétiques, capacitifs, à ultrasons. Pour éviter les interférences entre capteurs visant la même région d'une file de rails, on pourra choisir deux types de capteurs différents pour les mesures de distances latérales et verticales.

Au châssis indéformable 16 du chariot 12 est fixé une centrale inertielle 34 à au moins trois gyromètres et trois accéléromètres, cette centrale inertielle 34 étant dite de précision, au sens où elle est en mesure de délivrer des signaux d'orientation absolue, c'est-à-dire sans dérive, dans un référentiel géostationnaire. Il s'agit donc d'un type de centrale dont les gyroscopes sont en mesure de détecter la projection de la rotation de la terre et dont les accéléromètres sont en mesure de détecter la projection de la gravité.

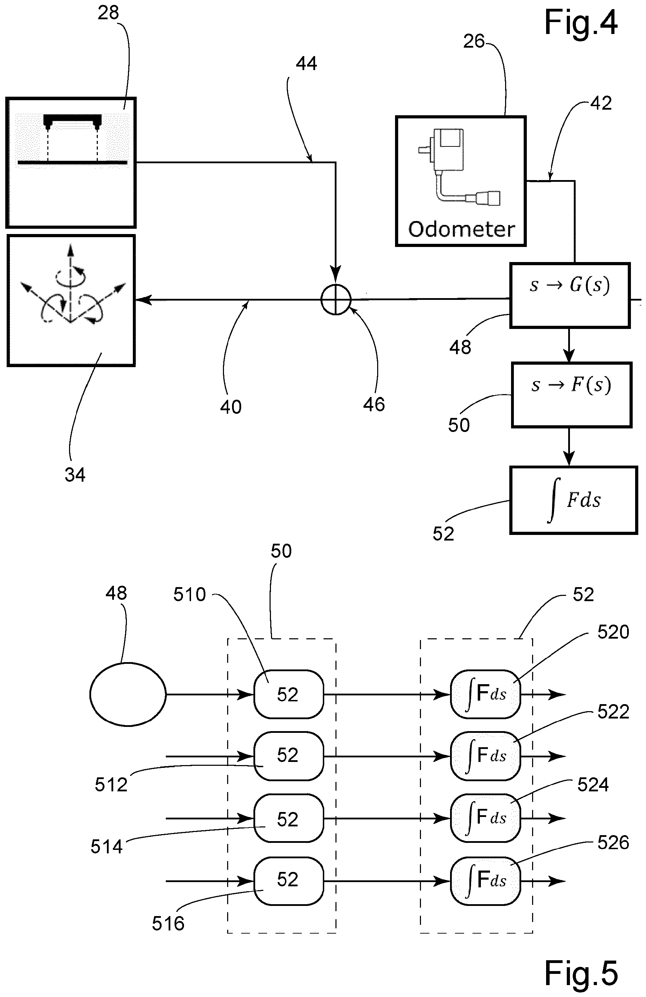

Ainsi instrumenté, le chariot 12 permet de déterminer d'une part l'orientation absolue de la centrale inertielle 34 dans un référentiel géostationnaire, et d'autre part l'orientation relative de chacune des files rails 2 par rapport au châssis 16, donc à la centrale inertielle 34 solidaire du châssis 16. Pour déduire de ces données métrologiques des paramètres de la géométrie de chacune des files de rails 2 dans un repère absolu, est proposé un procédé spécifique, illustré sur les figures 4 et 5.

Alors que le chariot 12 roule à faible vitesse, notamment à une vitesse inférieure à 10km/h, vitesse qui peut ne pas être constante et la machine 14 étant susceptible de ralentir, voire de s'arrêter de façon prolongée au rythme des travaux engagés sur la voie ferrée 1, on échantillonne simultanément à intervalles de temps constants les signaux issus des odomètres 26, de l'équipement de mesure 28 et de la centrale inertielle 34.

On détermine, en fonction au moins de signaux délivrés par la centrale inertielle 34, des valeurs successives d'au moins une composante d'orientation absolue de la centrale inertielle 34 dans un référentiel géostationnaire, par exemple des valeurs successives de l'angle de roulis et/ou des valeurs successives de l'angle de tangage (opération 40).

On détermine pour au moins une file de rails observée 2 parmi les deux files de rails, et de préférence pour chacune des deux files de rails 2 prise comme file de rails observée, des valeurs successives d'abscisse curviligne du véhicule sur la file de rails observée 2, en fonction au moins de signaux délivrés par l'odomètre 26 associé à la file de rail observée (opération 42).

On détermine, en fonction au moins de signaux délivrés par l'équipement de mesure 28, des valeurs successives d'au moins une composante d'orientation relative de la file de rails observée 2 par rapport à la centrale inertielle 34, et de préférence des deux composantes discutées précédemment que sont l'angle de lacet $\psi_R$ du châssis par rapport à la file de rails observée 2, et l'angle de tangage $\theta_R$ du châssis par rapport à la file de rails observée (opération 44).

À partir de ces éléments, on est en mesure de calculer, en fonction au moins des valeurs successives de la composante d'orientation absolue de la centrale inertielle et des valeurs successives de la composante d'orientation relative de la file de rails observée par rapport à la centrale inertielle, des valeurs successives d'au moins une composante d'orientation ou de positionnement absolue de la file de rails observée 2. En pratique, on effectue simplement une somme algébrique d'une valeur instantanée de la composante d'orientation absolue de la centrale inertielle et d'une valeur instantanée simultanée de la composante d'orientation relative de chacune de la file de rails observée par rapport à la centrale inertielle (opération 46).

Ainsi, Si l'on note $\psi_R$(t) la valeur à un instant t de mesure de l'angle déterminé par l'équipement de mesure 28 dans le plan horizontal entre la direction longitudinale de la centrale inertielle 34 et la direction de la file de rails observée 2, et $\psi_C$(t) la valeur au même instant t de l'angle de lacet déterminé simultanément par la centrale inertielle 34, la composante d'orientation absolue $\psi_A$(t) de la file de rails observée peut s'exprimer comme la somme algébrique :

[Math 8]

$$\psi_A(t) = \psi_R(t) + \psi_C(t)$$

De façon analogue, si l'on note $\theta_R$(t) la valeur instantanée de l'angle déterminé par l'équipement de mesure dans le plan vertical longitudinal entre la direction longitudinale de la centrale inertielle 34 et la direction de la file de rails observée 2, et $\theta_C$(t) la valeur instantanée de l'angle de tangage déterminé simultanément par la centrale inertielle 34, la composante d'orientation absolue $\theta_A$(t) de la file de rails peut s'exprimer comme la somme algébrique :

[Math 9]

$$\theta_A(t) = \theta_R(t) + \theta_C(t)$$

On est alors en mesure de construire une ou plusieurs fonctions $s \rightarrow G(s)$ liant certaines au moins des valeurs successives d'abscisse curviligne à des valeurs concomitantes parmi les valeurs successives de la composante d'orientation ou de positionnement absolue de la file de rails observée dans l'espace. (opération 48)

Ainsi, pour la composante de lacet d'une des files de rails, la fonction $s \rightarrow G_L(s)$ sera construite en reliant pour tous les instants t de mesure ou pour au moins certains d'entre eux, la valeur s(t) mesurée par l'odomètre associé à la file de rails observée à la valeur $\psi_A$(t). De façon similaire, la fonction $s \rightarrow G_T(s)$ sera construite en reliant pour tous les instants t de mesure ou pour au moins certains d'entre eux, la valeur s(t) mesurée par l'odomètre associé à la file de rails observée à la valeur $\theta_A$(t).

Une fois cette étape accomplie dans le domaine temporel, on a construit une ou plusieurs fonctions $s \rightarrow G(s)$ où le temps n'apparaît plus comme variable. On est alors en mesure d'appliquer à chaque fonction ainsi construite un filtre linéaire passe bande ou passe haut, qui n'est pas un filtre temporel, mais un filtre spatial, de manière à construire une fonction filtrée $s \rightarrow F(s)$ (opération 50). Le filtre linéaire mis en œuvre est de préférence un filtre à réponse impulsionnelle finie d'ordre N quelconque, de préférence supérieur ou égal à 2, qui se traduit par la combinaison linéaire suivante :

[Math 10]

$$F(s_n) = \sum_{k=0}^{N-1} b_k . G(s_{n-k})$$

où $b_k$ désigne le coefficient d'ordre k de la fonction de transfert du filtre, et $s_i$ désigne pour $1 \leq i \leq n$ les valeurs successives de l'abscisse curviligne de la file de rails observée.

En pratique, si le souhait est d'observer les paramètres de la géométrie de la voie ferrée suivant les domaines de longueurs d'ondes définies par la norme, on mettra en œuvre au moins un filtre passe-bande dans l'une des trois bandes suivantes : 3m à 25m (D1), 25m à 70m (D2), 70m à 150m (D3), ou un filtre passe-bande réalisé par une fonction de calcul de flèche (CF), et en pratique, l'opération 50 sera menée en parallèle pour chacun des domaines de longueurs d'ondes souhaités parmi ceux disponibles, ce que l'on a schématisé en figure 5 par les sous-opérations parallèles 510, 512, 514, 516.

Enfin, on est en mesure d'estimer (opération 52), pour une succession de valeurs courantes d'abscisse curviligne $l$ parmi les valeurs d'abscisse curviligne, une intégrale $I(l)$, sur un intervalle donné d'abscisses curvilignes borné par une valeur d'abscisse curviligne de référence $l_0$ et par la valeur courante d'abscisse curviligne $l$, de la fonction filtrée

[Math 11]

$$I(l) = \int_{s=l_o}^{s=l} F(s)ds$$

En pratique, l'intégrale $I(l)$ est estimée par une somme de Riemann ou par la méthode des trapèzes sur l'intervalle donné, avec un pas inférieur à 25cm, et de préférence inférieur à 1cm. Par exemple, avec une somme de Riemann :

[Math 12]

$$I(l) \approx \sum_{n=1}^{P} F(s_n).(s_n - s_{n-1})$$

où $s_0 = l_0$ et $s_P = l$ sont les bornes de l'intégrale d'intégration.

Le cas échéant, cette opération 52 est effectuée en parallèle pour chacun des domaines de longueurs d'ondes observés, d'où les sous-opérations parallèles 520, 522, 524, 526.

Dans l'hypothèse où la composante d'orientation relative de la file de rails observée 2 par rapport à la centrale inertielle 34 est un angle d'orientation dans un plan horizontal, et la composante d'orientation absolue de la centrale inertielle est un angle de lacet, l'intégrale I(l) sera un paramètre de dressage.

Dans l'hypothèse où la composante d'orientation relative de la file de rails observée 2 par rapport à la centrale inertielle 34 est un angle d'orientation par rapport à un plan vertical longitudinal du véhicule, et la composante d'orientation absolue de la centrale inertielle est un angle de tangage, l'intégrale I(l) sera un paramètre de nivellement longitudinal.

En pratique, les calculs peuvent être effectués en temps réel par un calculateur embarqué sur le véhicule 12, sur la machine 14 ou situé à distance.

En parallèle avec ces opérations de calcul, on peut utiliser des signaux délivrés par l'équipement de mesure 28 ou des valeurs successives de la composante d'orientation relative de la file de rails observée 2 par rapport à la centrale inertielle 34 pour piloter les vérins 24 d'attelage du chariot à la machine, dans le but de minimiser l'écart d'alignement entre le châssis 16 du chariot 12 et la voie ferrée 1.

Si l'on s'intéresse à l'alignement par rapport à la direction longitudinale dans le plan horizontal, on peut par exemple construire une boucle de rétroaction négative visant à minimiser l'angle $\psi_R$ observé pour l'une des files de rails 2, ou plus simplement visant à minimiser en valeur absolue la différence $|y_1 - y_2|$ constatée sur une file de rails 2. Si l'on s'intéresse aux deux files de rails, on pourra construire une boucle de rétroaction visant à minimiser la somme des valeurs absolues des écarts observés pour chacune des deux files de rails : $(|y_1 - y_2| + |y_1 - y_2|)$.

De façon analogue, si l'on s'intéresse à l'alignement par rapport à la direction longitudinal dans le plan horizontal, on peut par exemple construire une boucle de rétroaction négative visant à minimiser l'angle $\theta_R$ observé pour l'une des files de rails, ou plus simplement visant à minimiser en valeur absolue la différence $|z_1 - z_2|$ constatée sur une file de rails. Si l'on s'intéresse aux deux files de rails, ou visant à minimiser la somme des valeurs absolues des écarts observés pour chacune des deux files de rails : $(|z_1 - z_2| + |z_1 - z_2|)$.

On peut le cas échéant détecter des défaillances du ou des odomètres 26 en comparant des valeurs d'accélération longitudinale délivrées par la centrale inertielle 34 à des valeurs d'accélération moyenne déterminée en fonction des signaux délivrés par le ou les odomètres 26 et/ou en comparant des valeurs de vitesse angulaire autour d'un axe vertical délivrées par la centrale inertielle 34 à des valeurs de vitesse angulaire déduite des signaux délivrés par le ou les odomètres 26. Lorsqu'une défaillance est détectée, on exécute une procédure de fonctionnement en mode dégradé, dans laquelle on détermine les valeurs successives d'abscisse curviligne du véhicule 12 sur chacune des deux files de rails 2 en fonction au moins de signaux accélérométriques ou de vitesse angulaire délivrés par la centrale inertielle 34.

Naturellement, les exemples représentés sur les figures et discutés ci-dessus ne sont donnés qu'à titre illustratif et non limitatif. Il est explicitement prévu que l'on puisse combiner entre eux les différents modes de réalisation illustrés pour en proposer d'autres.

Comme énoncé dans l'exposé de l'invention, d'autres principes de mesure de l'orientation relative de la centrale inertielle par rapport à chacune des files de rails sont envisagés.

On peut également envisager de n'équiper le chariot que d'un seul odomètre, permettant de mesurer directement l'abscisse curviligne d'une des files de rails. L'opération de détermination des valeurs successives d'abscisse curviligne de la file de rails opposée peut alors être effectuée en fonction au moins de signaux délivrés par l'odomètre de signaux délivrés par l'équipement de mesure.

Le procédé de détermination des paramètres de géométrie de la voie ferrée décrit ci-dessus peut également être déroulé en utilisant un chariot à quatre roues, ou plus généralement un véhicule ferroviaire qui peut reposer sur plusieurs trains de roue ou sur plusieurs bogies. Le cas échéant, le châssis auquel la centrale inertielle est solidarisée peut être lié aux roues par un ou plusieurs étages de suspension, par exemple une suspension primaire et/ou une suspension secondaire.

Dans ces hypothèses, l'équipement de mesure de l'orientation relative de chacune des files de rails par rapport à la centrale inertielle fera de préférence appel à d'autres principes de mesure que ceux décrits jusqu'ici.

Suivant un mode de réalisation, l'équipement de mesure comporte au moins une et de préférence au moins deux caméras de détection d'un ou plusieurs faisceaux laser linéiques projetés sur chacune des files de rails. Par exemple, chaque caméra est fixée au châssis portant la centrale inertielle de manière fixe dans le repère de la centrale inertielle, et orientée de manière à viser et capturer la position d'une ligne laser projetée sur la file de rails observée, l'équipement de mesure déterminant par triangulation la position verticale et latérale relative entre la file de rails observée et la caméra.

Suivant un autre mode de réalisation, l'équipement de mesure comporte au moins un et de préférence au moins deux télémètres lasers également placés dans le repère de la centrale inertielle de manière à scruter les files de rails de la voie ferrée. Suivant le principe de télémétrie par laser, la distance est donnée par la mesure du délai entre l'émission d'une impulsion et la détection d'une impulsion réfléchie. Le faisceau laser projeté est orienté par un miroir tournant, ce qui permet de scruter un plan de l'espace qui peut couvrir les deux files de rails et d'en déduire par triangulation pour chaque file de rails une mesure de distance latérale et une mesure de distance verticale. Avec deux télémètres laser placés à distance l'un de l'autre dans la direction longitudinale du véhicule, on peut ainsi obtenir les huit dimensions recherchées, à savoir quatre distances latérales et quatre distances verticales.

Suivant une autre variante, l'équipement de mesure comporte au moins une caméra à temps de vol (caméra ToF, « time of flight ») placée dans le repère de la centrale inertielle, permettant de visualiser une scène en trois dimensions dans son champ de vision. Dans la mesure où le champ de vision de ce type de caméra est relativement étroit, on pourra avantageusement utiliser une caméra de ce type par file de rails.

## Revendications

**1.** Procédé de détermination d'au moins un paramètre géométrique d'une voie ferrée (1) à deux files de rails (2), dans lequel :

- on fait rouler sur la voie ferrée (1) un véhicule (10) portant une centrale inertielle (34), un équipement de mesure (28) d'au moins une composante d'orientation relative d'au moins une des deux files de rails par rapport à la centrale inertielle, et un ou plusieurs odomètres (26),
- on détermine, en fonction au moins de signaux délivrés par la centrale inertielle (34), des valeurs successives d'au moins une composante d'orientation absolue de la centrale inertielle (34) dans un référentiel géostationnaire,
- pour au moins une file de rails observée (2) parmi les deux files de rails (2), et de préférence pour chacune des deux files de rails (2) prise comme file de rails observée,

  i) on détermine, en fonction au moins de signaux délivrés par le ou les odomètres (26), des valeurs successives d'abscisse curviligne du véhicule sur la file de rails observée (2),
  ii) on détermine, en fonction au moins de signaux délivrés par l'équipement de mesure (28), des valeurs successives d'au moins une composante d'orientation relative de la file de rails observée par rapport à la centrale inertielle (34),
  iii) on calcule, en fonction au moins des valeurs successives de la composante d'orientation absolue de la centrale inertielle (34) et des valeurs successives de la composante d'orientation relative de la file de rails observée (2) par rapport à la centrale inertielle (34), des valeurs successives d'au moins une composante d'orientation absolue ou de positionnement absolu de la file de rails observée (2),

**caractérisé en ce que** :

iv) on construit une fonction $s \to G(s)$ liant certaines au moins des valeurs successives d'abscisse curviligne à des valeurs concomitantes parmi les valeurs successives de la composante d'orientation absolue ou de positionnement absolu de la file de rails observée dans l'espace,
v) on applique un filtre linéaire passe-haut ou passe-bande à la fonction $s \to G(s)$, de manière à construire une fonction filtrée $s \to F(s)$,
vi) on estime, pour une succession de valeurs courantes d'abscisse curviligne $l$ parmi les valeurs d'abscisse curviligne, une intégrale $I(l)$, sur un intervalle donné d'abscisses curvilignes borné par une valeur d'abscisse curviligne de référence $l_0$ et par la valeur courante d'abscisse curviligne $l$, de la fonction filtrée

[Math 13]

$$I(l) = \int_{s=l_o}^{s=l} F(s)\,ds$$

**2.** Procédé selon la revendication 1, **caractérisé en ce que** le filtre linéaire est un filtre passe-bande, de préférence dans l'une des trois bandes suivantes : 3m à 25m, 25m à 70m, 70m à 150m, ou une fonction de calcul de flèche.

**3.** Procédé selon l'une quelconque des revendications précédentes, **caractérisé en ce que** l'intégrale $I(l)$ est estimée par une somme de Riemann ou par la méthode des trapèzes sur l'intervalle donné, avec un pas inférieur à 25cm, et de préférence inférieur à 1cm.

**4.** Procédé selon l'une quelconque des revendications précédentes, **caractérisé en ce que** l'opération de calcul des valeurs successives d'au moins une composante d'orientation ou de positionnement absolue de la file de rails observée (2) consiste, à des instants successifs, en une somme algébrique d'une valeur instantanée de la composante d'orientation absolue de la centrale inertielle et d'une valeur instantanée simultanée de la composante d'orientation relative de chacune de la file de rails observée par rapport à la centrale inertielle.

**5.** Procédé selon l'une quelconque des revendications précédentes, **caractérisé en ce que** la composante d'orientation relative de la file de rails observée (2) par rapport à la centrale inertielle (34) est un angle d'orientation dans un plan horizontal, et la composante d'orientation absolue de la centrale inertielle est un angle de lacet, l'intégrale I(l) étant un paramètre de dressage.

**6.** Procédé selon l'une quelconque des revendications précédentes, **caractérisé en ce que** la composante d'orientation relative de la file de rails observée (2) par rapport à la centrale inertielle (34) est un angle d'orientation par rapport à un plan vertical longitudinal (V) du véhicule (12), et la composante d'orientation absolue de la centrale inertielle est un angle de tangage, l'intégrale I(l) étant un paramètre de nivellement longitudinal.

**7.** Procédé selon l'une quelconque des revendications précédentes, **caractérisé en ce que** pour chaque file de rails observée (2), l'équipement de mesure délivre au moins deux signaux simultanés de mesure de distance latérale entre deux points de référence (30) du véhicule (12) et la file de rails observée (2), les deux points de référence (30) étant à une distance (A) l'un de l'autre supérieure à 250mm, et de préférence supérieure à 500mm.

**8.** Procédé selon l'une quelconque des revendications précédentes, **caractérisé en ce que** pour chaque file de rails observée (2), l'équipement de mesure délivre au moins deux signaux simultanés de mesure de distance verticale entre deux points de référence (32) du véhicule (12) et la file de rails observée (2), les deux points de référence (32) étant à une distance (B) l'un de l'autre supérieure à 250mm, et de préférence supérieure à 500mm.

**9.** Procédé selon l'une quelconque des revendications précédentes, **caractérisé en ce que** l'on commande au moins un actionneur (24) de correction d'inscription du véhicule (12) sur la voie ferrée (1) en fonction des signaux délivrés par l'équipement de mesure (28) ou des valeurs successives de la composante d'orientation relative de la file de rails observée (2) par rapport à la centrale inertielle (34) pour réduire un écart entre les signaux délivrés par l'équipement de mesure (38) et des valeurs prédéterminées, ou pour réduire un écart entre les valeurs successives de la composante d'orientation relative de la file de rails observée (2) et une valeur prédéterminée de la composante d'orientation relative de la file de rails observée (2).

10. Procédé selon l'une quelconque des revendications précédentes, **caractérisé en ce que** l'opération de détermination des valeurs successives d'abscisse curviligne du véhicule (12) sur la file de rails observée (2) est faite en fonction au moins de signaux délivrés par un odomètre (26) associé à la file de rail observée (2) parmi le ou les odomètres.

11. Procédé selon l'une quelconque des revendications précédentes, **caractérisé en ce que** l'opération de détermination des valeurs successives d'abscisse curviligne du véhicule sur la file de rails observée (2) est faite en fonction au moins de signaux délivrés par un odomètre (26) qui n'est pas associé à la file de rail observée (2) parmi le ou les odomètres et de signaux délivrés par l'équipement de mesure (28).

12. Procédé selon l'une quelconque des revendications précédentes, **caractérisé en ce que** l'on détecte des défaillances du ou des odomètres (26) en comparant des valeurs d'accélération longitudinale délivrées par la centrale inertielle (34) à des valeurs accélération moyenne déterminée en fonction des signaux délivrés par le ou les odomètres (26) et/ou en comparant des valeurs de vitesse angulaire autour d'un axe vertical délivrées par la centrale inertielle (34) à des valeurs de vitesse angulaire déduite des signaux délivrés par le ou les odomètres (26).

13. Procédé selon la revendication 12, **caractérisé en ce que** lorsqu'une défaillance est détectée, on exécute une procédure de sécurité, dans laquelle on détermine les valeurs successives d'abscisse curviligne du véhicule (12) sur chacune des deux files de rails (2) en fonction au moins de signaux accélérométriques ou de vitesse angulaire délivrés par la centrale inertielle (34).

14. Système pour la mise en œuvre du procédé selon l'une quelconque des revendications précédentes, comportant un véhicule apte à rouler sur une voie ferrée (1) à deux files de rails (2) parallèles, le véhicule (12) portant une centrale inertielle (34) à au moins trois gyromètres et trois accéléromètres, un équipement de mesure (28) d'une orientation relative de chacune des deux files de rails (2) par rapport à la centrale inertielle, et un ou plusieurs odomètres (26), **caractérisé en ce que** le système comporte en outre des moyens de calcul programmés pour exécuter les opérations de calcul des valeurs successives d'au moins une composante d'orientation ou de positionnement absolue d'une file de rails observée (2) parmi les deux files de rails, de construction de la fonction $s \rightarrow G(s)$, d'application d'un filtre linéaire, de construction de la fonction filtrée $s \rightarrow F(s)$ et d'estimation de l'intégrale $I(l)$.

15. Système selon la revendication 14, **caractérisé en ce que** l'équipement de mesure (28) comporte, associés à chacune des deux files de rails (2), au moins deux capteurs de mesure de distance latérale (30) entre deux points de référence du véhicule et la file de rails associée, les deux points de référence étant à une distance (A) l'un de l'autre supérieure à 250mm, et de préférence supérieure à 500mm.

16. Système selon l'une quelconque des revendications 14 à 15, **caractérisé en ce que** l'équipement de mesure (28) comporte, associés à chacune des deux files de rails (2), au moins deux capteurs de mesure de distance verticale (32) entre deux points de référence du véhicule et la file de rails associée (2), les deux points de référence étant à une distance (B) l'un de l'autre supérieure à 250mm, et de préférence supérieure à 500mm.

17. Système selon l'une quelconque des revendications 14 à 16, **caractérisé en ce que** l'équipement de mesure (28) comporte au moins une et de préférence au moins deux caméras de détection d'un ou plusieurs faisceaux laser linéiques projetés sur chacune des files de rails.

18. Système selon l'une quelconque des revendications 14 à 17, **caractérisé en ce que** l'équipement de mesure (28) comporte au moins un et de préférence au moins deux télémètres lasers scrutant les files de rails de la voie ferrée.

19. Système selon l'une quelconque des revendications 14 à 18, **caractérisé en ce que** le véhicule (12) est un chariot à deux roues (18), mû par une machine (14) et relié à la machine par l'intermédiaire d'au moins trois liaisons (22, 24) permettant de piloter l'assiette et l'inscription du chariot (12) en fonction des composantes d'orientation relative.

20. Système selon l'une quelconque des revendications 14 à 18, **caractérisé en ce que** le véhicule (12) est un chariot à au moins quatre roues.

**Patentansprüche**

1. Verfahren zum Bestimmen von mindestens einem geometrischen Parameter eines Gleises (1) mit zwei Schienensträngen (2), wobei:

- auf dem Gleis (1) ein Fahrzeug (10) gefahren wird, das eine Trägheitsmesseinheit (34), eine Ausrüstung (28) zum Messen mindestens einer Komponente der relativen Ausrichtung für mindestens einen der zwei Schienenstränge relativ zu der Trägheitsmesseinheit und ein oder mehrere Wegstreckenmesser (26) trägt,
- in Abhängigkeit von mindestens den Signalen, die durch die Trägheitsmesseinheit (34) abgegeben werden, aufeinanderfolgende Werte von mindestens einer Komponente der absoluten Ausrichtung der Trägheitsmesseinheit (34) in einem geostationären Bezugssystem bestimmt werden,
- für mindestens einen beobachteten Schienenstrang (2) unter den zwei Schienensträngen (2) und vorzugsweise für jeden der zwei Schienenstränge (2), der als beobachteter Schienenstrang genommen wird,

   i) in Abhängigkeit von mindestens den Signalen, die durch den oder die Wegstreckenmesser (26) abgegeben werden, aufeinanderfolgende Werte der krummlinigen Abszisse des Fahrzeugs auf dem beobachteten Schienenstrang (2) bestimmt werden,
   ii) in Abhängigkeit von mindestens den Signalen, die durch die Messausrüstung (28) abgegeben werden, aufeinanderfolgende Werte von mindestens einer Komponente der relativen Ausrichtung des beobachteten Schienenstrangs relativ zu der Trägheitsmesseinheit (34) bestimmt werden,
   iii) in Abhängigkeit von mindestens den aufeinanderfolgenden Werten der Komponente der absoluten Ausrichtung der Trägheitsmesseinheit (34) und der aufeinanderfolgenden Werte der Komponente der relativen Ausrichtung des beobachteten Schienenstrangs (2) relativ zu der Trägheitsmesseinheit (34), aufeinanderfolgende Werte von mindestens einer Komponente der absoluten Ausrichtung oder die absolute Positionierung des beobachteten Schienenstrangs (2) berechnet werden,

**dadurch gekennzeichnet, dass:**

   iv) eine Funktion $s \rightarrow G(s)$, die mindestens gewisse aufeinanderfolgende Werte der krummlinigen Abszisse mit den gleichzeitigen Werten unter den aufeinanderfolgenden Werten der Komponente der absoluten Ausrichtung oder der absoluten Positionierung des beobachteten Schienenstrangs in dem Raum verbindet, konstruiert wird,
   v) ein linearer Hochpass- oder Bandpassfilter auf die Funktion $s \rightarrow G(s)$ angewendet wird, um eine gefilterte Funktion $s \rightarrow F(s)$ zu konstruieren,
   vi) für eine Folge von aktuellen Werten der krummlinigen Abszisse $l$ unter den Werten der krummlinigen Abszisse, ein Integral $I(l)$ auf einem gegebenen Intervall von krummlinigen Abszissen, das durch einen Referenzwert $l_0$ der krummlinigen Abszisse und durch den aktuellen Wert der krummlinigen Abszisse $l$ der gefilterten Funktion beschränkt ist, geschätzt wird

[Math. 13]

$$I(l) = \int_{s=l_0}^{s=l} F(s)\,ds$$

2. Verfahren nach Anspruch 1, **dadurch gekennzeichnet, dass** der lineare Filter ein Bandpassfilter, vorzugsweise in einem der folgenden drei Bänder ist: 3 m bis 25 m, 25 m bis 70 m, 70 m bis 150 m oder eine Pfeilberechnungsfunktion ist.

3. Verfahren nach einem der vorstehenden Ansprüche, **dadurch gekennzeichnet, dass** das Integral $I(l)$ durch eine Riemann-Summe oder durch die Trapezmethode über das gegebene Intervall mit einer Schrittweite von weniger als 25 cm und vorzugsweise weniger als 1 cm geschätzt wird.

4. Verfahren nach einem der vorstehenden Ansprüche, **dadurch gekennzeichnet, dass** der Vorgang der Berechnung von aufeinanderfolgenden Werten für mindestens einer Komponente der absoluten Ausrichtung oder Positionierung des beobachteten Schienenstrangs (2) zu aufeinanderfolgenden Zeitpunkten in einer algebraischen Summe eines Momentanwerts der Komponente der absoluten Ausrichtung der Trägheitsmesseinheit und einem gleichzeitigen Momentanwert der Komponente der relativen Ausrichtung von jedem beobachteten Schienenstrang relativ zu der Trägheitsmesseinheit besteht.

5. Verfahren nach einem der vorstehenden Ansprüche,
**dadurch gekennzeichnet, dass** die Komponente der relativen Ausrichtung des beobachteten Schienenstrangs (2) relativ zu der Trägheitsmesseinheit (34) ein Ausrichtungswinkel in einer horizontalen Ebene ist und die Komponente der absoluten Ausrichtung der Trägheitsmesseinheit ein Gierwinkel ist, wobei das Integral I(l) ein Abrichtparameter ist.

6. Verfahren nach einem der vorstehenden Ansprüche,
**dadurch gekennzeichnet, dass** die Komponente der relativen Ausrichtung des beobachteten Schienenstrangs (2) relativ zu der Trägheitsmesseinheit (34) ein Ausrichtungswinkel relativ zu einer vertikalen Längsebene (V) des Fahrzeugs (12) ist und die Komponente der absoluten Ausrichtung der Trägheitsmesseinheit ein Nickwinkel ist, wobei das Integral I(l) ein Längsnivellierungsparameter ist.

7. Verfahren nach einem der vorstehenden Ansprüche,
**dadurch gekennzeichnet, dass** die Messausrüstung für jeden beobachteten Schienenstrang (2) mindestens zwei gleichzeitige Signale für die Messung des seitlichen Abstands zwischen zwei Referenzpunkten (30) des Fahrzeugs (12) und dem beobachteten Schienenstrang (2) abgibt, wobei die zwei Referenzpunkte (30) in einem Abstand (A) von mehr als 250 mm und vorzugsweise mehr als 500 mm voneinander liegen.

8. Verfahren nach einem der vorstehenden Ansprüche,
**dadurch gekennzeichnet, dass** die Messausrüstung für jeden beobachteten Schienenstrang (2) mindestens zwei gleichzeitige Signale für die Messung des vertikalen Abstands zwischen zwei Referenzpunkten (32) des Fahrzeugs (12) und dem beobachteten Schienenstrang (2) abgibt, wobei die zwei Referenzpunkte (32) in einem Abstand (B) von mehr als 250 mm und vorzugsweise mehr als 500 mm voneinander liegen.

9. Verfahren nach einem der vorstehenden Ansprüche,
**dadurch gekennzeichnet, dass** mindestens eine Stelleinrichtung (24) für die Korrektur der Registrierung des Fahrzeugs (12) auf dem Gleis (1) in Abhängigkeit von den Signalen, die durch die Messausrüstung (28) abgegeben werden oder von aufeinanderfolgenden Werten der Komponente der relativen Ausrichtung des beobachteten Schienenstrangs (2) relativ zu der Trägheitsmesseinheit (34) zum Reduzieren einer Abweichung zwischen den Signalen, die durch die Messausrüstung (38) abgegeben werden, und den zuvor bestimmten Werten oder zum Reduzieren einer Abweichung zwischen den aufeinanderfolgenden Werten der Komponente der relativen Ausrichtung des beobachteten Schienenstrangs (2) und einem zuvor bestimmten Wert der Komponente der relativen Ausrichtung des beobachteten Schienenstrangs (2), gesteuert werden.

10. Verfahren nach einem der vorstehenden Ansprüche,
**dadurch gekennzeichnet, dass** der Vorgang des Bestimmens von aufeinanderfolgenden Werten der krummlinigen Abszisse des Fahrzeugs (12) auf dem beobachteten Schienenstrang (2) in Abhängigkeit mindestens von Signalen, die durch einen Wegstreckenmesser (26) unter dem oder den Wegstreckenmessern abgegeben werden, der dem beobachteten Schienenstrang (2) zugeordnet ist, vorgenommen wird.

11. Verfahren nach einem der vorstehenden Ansprüche,
**dadurch gekennzeichnet, dass** der Vorgang des Bestimmens der aufeinanderfolgenden Werte der krummlinigen Abszisse des Fahrzeugs auf dem beobachteten Schienenstrang (2) in Abhängigkeit von mindestens Signalen, die durch einen Wegstreckenmesser (26) unter dem oder den Wegstreckenmessern abgegeben werden, der nicht dem beobachteten Schienenstrang (2) zugeordnet ist, und Signalen, die durch die Messausrüstung (28) abgegeben werden, vorgenommen wird.

12. Verfahren nach einem der vorstehenden Ansprüche,
**dadurch gekennzeichnet, dass** Ausfälle des oder der Wegstreckenmesser(s) (26) bei einem Vergleichen der Längsbeschleunigungswerte, die durch die Trägheitsmesseinheit (34) abgegeben werden, mit den durchschnittlichen Beschleunigungswerten, die in Abhängigkeit von Signalen, die durch den oder die Wegstreckenmesser (26) abgegeben werden, und/oder bei einem Vergleichen der Winkelgeschwindigkeitswerte um eine vertikale Achse, die durch die Trägheitsmesseinheit (34) abgegeben werden, mit Winkelgeschwindigkeitswerten, die aus den Signalen abgeleitet werden, die durch den/die Wegstreckenmesser (26) abgegeben werden, erkannt werden.

**13.** Verfahren nach Anspruch 12, **dadurch gekennzeichnet, dass** wenn ein Ausfall erkannt wird, ein Sicherheitsverfahren ausgeführt wird, wobei die aufeinanderfolgenden Werte der krummlinigen Abszisse des Fahrzeugs (12) auf jedem der zwei Schienenstränge (2) in Abhängigkeit von mindestens den Beschleunigungs- oder Winkelgeschwindigkeitssignalen, die durch die Trägheitsmesseinheit (34) abgegeben werden, bestimmt werden.

**14.** System für die Umsetzung des Verfahrens nach einem der vorstehenden Ansprüche, umfassend ein Fahrzeug, das geeignet ist, um auf einem Gleis (1) mit zwei parallelen Schienensträngen (2) zu fahren, wobei das Fahrzeug (12) eine Trägheitsmesseinheit (34), mindestens drei Gyrometer und drei Beschleunigungsmesser, eine Ausrüstung (28) zum Messen einer relativen Ausrichtung von jedem der zwei Schienenstränge (2) relativ zu der Trägheitsmesseinheit und ein oder mehrere Wegstreckenmesser (26) trägt, **dadurch gekennzeichnet, dass** das System ferner Berechnungsmittel, die zum Ausführen der Vorgänge der Berechnung der aufeinanderfolgenden Werte von mindestens einer Komponente der absoluten Ausrichtung oder Positionierung eines beobachteten Schienenstrangs (2) unter den zwei Schienensträngen, der Konstruktion der Funktion $s \rightarrow G(s)$, der Anwendung eines linearen Filters, der Konstruktion der gefilterten Funktion $s \rightarrow F(s)$ und der Schätzung des Integrals I(I) programmiert sind, umfasst.

**15.** System nach Anspruch 14, **dadurch gekennzeichnet, dass** die Messausrüstung (28), die jedem der zwei Schienenstränge (2) zugeordnet ist, mindestens zwei Sensoren zum Messen des seitlichen Abstands (30) zwischen zwei Referenzpunkten des Fahrzeugs und dem zugeordneten Schienenstrang umfasst, wobei die zwei Referenzpunkte in einem Abstand (A) von mehr als 250 mm und vorzugsweise mehr als 500 mm voneinander liegen.

**16.** System nach einem der Ansprüche 14 bis 15, **dadurch gekennzeichnet, dass** die Messausrüstung (28), die jedem der zwei Schienenstränge (2) zugeordnet ist, mindestens zwei Sensoren zum Messen des vertikalen Abstands (32) zwischen zwei Referenzpunkten des Fahrzeugs und dem zugeordneten Schienenstrang (2) umfasst, wobei die zwei Referenzpunkte in einem Abstand (B) von mehr als 250 mm und vorzugsweise mehr als 500 mm voneinander liegen.

**17.** System nach einem der Ansprüche 14 bis 16, **dadurch gekennzeichnet, dass** die Messausrüstung (28) mindestens eine und vorzugsweise mindestens zwei Kameras zum Erfassen eines oder mehrerer linearer Laserstrahlen, die auf jeden der Schienenstränge projiziert werden, umfasst.

**18.** System nach einem der Ansprüche 14 bis 17, **dadurch gekennzeichnet, dass** die Messausrüstung (28) mindestens einen und vorzugsweise mindestens zwei Laser-Entfernungsmesser umfasst, die die Schienenstränge des Gleises abtasten.

**19.** System nach einem der Ansprüche 14 bis 18, **dadurch gekennzeichnet, dass** das Fahrzeug (12) ein zweirädriges Untergestell (18) ist, das durch eine Maschine (14) angetrieben wird und mit der Maschine über mindestens drei Verbindungen (22, 24) verbunden ist, die es ermöglichen, die Trimmung und die Registrierung des Untergestells (12) in Abhängigkeit der Komponenten der relativen Ausrichtung zu lenken.

**20.** System nach einem der Ansprüche 14 bis 18, **dadurch gekennzeichnet, dass** das Fahrzeug (12) ein Untergestell mit mindestens vier Rädern ist.

## Claims

**1.** A method for determining at least one geometric parameter of a railroad track (1) with two rows of rails (2), in which:

- a vehicle (10) carrying an inertial unit (34), a piece of equipment (28) for measuring at least one relative orientation component of at least one of the two rows of rails with respect to the inertial unit, and one or more odometers (26) is made to travel over the railroad track (1),
- successive values of at least one absolute orientation component of the inertial unit (34) in a geostationary reference frame are determined on the basis of at least signals produced by the inertial unit (34),
- for at least one observed row of rails (2) from the two rows of rails (2), and preferably for each of the two rows of rails (2) taken as an observed row of rails,

    i) successive curved-abscissa values of the vehicle on the observed row of rails (2) are determined on the basis of at least signals produced by the odometer(s) (26),

ii) successive values of at least one relative orientation component of the observed row of rails with respect to the inertial unit (34) are determined on the basis of at least signals produced by the measuring equipment (28),

iii) successive values of at least one absolute orientation or absolute positioning component of the observed row of rails (2) are calculated on the basis of at least the successive values of the absolute orientation component of the inertial unit (34) and the successive values of the relative orientation component of the observed row of rails (2) with respect to the inertial unit (34),

**characterized in that:**

iv) a function $s \rightarrow G(s)$ is constructed which links at least some of the successive curved-abscissa values to concomitant values from the successive values of the absolute orientation or absolute positioning component of the row of rails observed in space,

v) a high-pass or band-pass linear filter is applied to the function $s \rightarrow G(s)$ so as to construct a filtered function $s \rightarrow F(s)$,

vi) for a succession of current curved-abscissa values $l$ from the curved-abscissa values, an integral $I(l)$ is estimated, over a given curved-abscissa interval bounded by a reference curved-abscissa value $l_0$ and by the current curved-abscissa value $l$, from the filtered function

[Math 13]

$$I(l) = \int_{s=l_0}^{s=l} F(s)\,ds$$

2. The method according to claim 1, **characterized in that** the linear filter is a band-pass filter, preferably in one of the three following bands: 3 m to 25 m, 25 m to 70 m, 70 m to 150 m, or an arrow calculation function.

3. The method according to either of the preceding claims, **characterized in that** the integral $I(l)$ is estimated by a Riemann sum or by the trapezoidal method over the given interval, with a step size of less than 25 cm, and preferably less than 1 cm.

4. The method according to any of the preceding claims, **characterized in that** the operation of calculating successive values of at least one absolute orientation or positioning component of the observed row of rails (2) consists, at successive times, of an algebraic sum of an instantaneous value of the absolute orientation component of the inertial unit and of a simultaneous instantaneous value of the relative orientation component of each of the observed rows of rails with respect to the inertial unit.

5. The method according to any of the preceding claims, **characterized in that** the relative orientation component of the observed row of rails (2) with respect to the inertial unit (34) is an orientation angle in a horizontal plane, and the absolute orientation component of the inertial unit is a yaw angle, the integral I(l) being an alignment parameter.

6. The method according to any of the preceding claims, **characterized in that** the relative orientation component of the observed row of rails (2) with respect to the inertial unit (34) is an orientation angle with respect to a vertical longitudinal plane (V) of the vehicle (12), and the absolute orientation component of the inertial unit is a pitch angle, the integral I(l) being a longitudinal leveling parameter.

7. The method according to any of the preceding claims, **characterized in that** for each observed row of rails (2), the measuring equipment produces at least two simultaneous signals for measuring the lateral distance between two reference points (30) on the vehicle (12) and the observed row of rails (2), the two reference points (30) being separated from one other by a distance (A) of greater than 250 mm, and preferably greater than 500 mm.

8. The method according to any of the preceding claims, **characterized in that** for each observed row of rails (2), the measuring equipment produces at least two simultaneous signals for measuring the vertical distance between two reference points (32) on the vehicle (12) and the observed row of rails (2), the two reference points (32) being separated from one other by a distance (B) of greater than 250 mm, and preferably greater than 500 mm.

9. The method according to any of the preceding claims,
**characterized in that** at least one actuator (24) for correcting the alignment of the vehicle (12) on the railroad track (1) can be controlled on the basis of the signals produced by the measuring equipment (28) or successive values of the relative orientation component of the observed row of rails (2) with respect to the inertial unit (34), in order to reduce a drift between the signals produced by the measuring equipment (38) and predetermined values or to reduce a drift between the successive values of the relative orientation component of the observed row of rails (2) and a predetermined value of the relative orientation component of the observed row of rails (2).

10. The method according to any of the preceding claims,
**characterized in that** the operation of determining the successive curved-abscissa values of the vehicle (12) on the observed row of rails (2) is performed on the basis of at least signals produced by an odometer (26) associated with the observed row of rails (2) from the odometer(s).

11. The method according to any of the preceding claims,
**characterized in that** the operation of determining the successive curved-abscissa values of the vehicle on the observed row of rails (2) is performed on the basis of at least signals produced by an odometer (26) not associated with the observed row of rails (2) from the odometer(s) and signals produced by the measuring equipment (28).

12. The method according to any of the preceding claims,
**characterized in that** failures of the odometer(s) (26) can be detected by comparing longitudinal acceleration values produced by the inertial unit (34) with average acceleration values determined on the basis of the signals produced by the odometer(s) (26) and/or by comparing angular velocity values about a vertical axis produced by the inertial unit (34) with angular velocity values deduced from the signals produced by the odometer(s) (26).

13. The method according to claim 12, **characterized in that** when a failure is detected, a safety procedure is carried out, in which successive curved-abscissa values of the vehicle (12) on each of the two rows of rails (2) are determined on the basis of at least accelerometric or angular velocity signals produced by the inertial unit (34).

14. A system for implementing the method according to any of the preceding claims, comprising a vehicle capable of traveling on a railroad track (1) with two parallel rows of rails (2), the vehicle (12) carrying an inertial unit (34) with at least three gyrometers and three accelerometers, a piece of equipment (28) for measuring a relative orientation of each of the two rows of rails (2) with respect to the inertial unit, and one or more odometers (26), **characterized in that** the system further comprises computing means programmed to perform the operations of calculating successive values of at least one absolute orientation or positioning component of an observed row of rails (2) from the two rows of rails, constructing the function $s \rightarrow G\,(s)$, applying a linear filter, constructing the filtered function $s \rightarrow F\,(s)$, and estimating the integral $I(l)$.

15. The system according to claim 14, **characterized in that** the measuring equipment (28) comprises, associated with each of the two rows of rails (2), at least two sensors for measuring the lateral distance (30) between two reference points on the vehicle and the associated row of rails, the two reference points being separated from one another by a distance (A) of greater than 250 mm, and preferably greater than 500 mm.

16. The system according to either of claims 14 to 15, **characterized in that** the measuring equipment (28) comprises, associated with each of the two rows of rails (2), at least two sensors for measuring the vertical distance (32) between two reference points on the vehicle and the associated row of rails (2), the two reference points being separated from one another by a distance (B) of greater than 250 mm, and preferably greater than 500 mm.

17. The system according to any of claims 14 to 16, **characterized in that** the measuring equipment (28) comprises at least one, and preferably at least two, camera(s) for detecting one or more linear laser beams projected onto each of the rows of rails.

18. The system according to any of claims 14 to 17, **characterized in that** the measuring equipment (28) comprises at least one, and preferably at least two, laser range finder(s) which scan(s) the rows of rails of the railroad track.

19. The system according to any of claims 14 to 18, **characterized in that** the vehicle (12) is a two-wheeled cart (18) which is driven by a machine (14) and connected to the machine via at least three links (22, 24) for controlling the position and alignment of the cart (12) on the basis of relative orientation components.

20. The system according to any of claims 14 to 18, **characterized in that** the vehicle (12) is a cart with at least four wheels.

Fig.1

Fig.2

Fig.3

Fig.4

28

44

26

42

Odometer

$s \to G(s)$

48

40

46

34

$s \to F(s)$

50

$\int F ds$

52

48

510

50

52

520

52

$\int F_{ds}$

512

52

$\int F_{ds}$

522

514

52

$\int F_{ds}$

524

516

52

$\int F_{ds}$

526

Fig.5

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- A methodology for the measurement of track geometry based on computer vision and inertial sensors. **JOSÉ L. ESCALONA**. ARXIV.ORG. CORNELL UNIVERSITY LIBRARY, 09 August 2020